# EUROPÄISCHE PATENTSCHRIFT

(11) **EP 3 017 698 B1**
(45) Veröffentlichungstag und Bekanntmachung des Hinweises auf die Patenterteilung: **20.12.2017**
(21) Anmeldenummer: 15192053.5
(22) Anmeldetag: 29.10.2015
(51) Int. Cl.: A01M 7/00, A01C 23/00, A01B 73/06

(54) **GÜLLEVERTEILER**
LIQUID MANURE DISTRIBUTOR
DISTRIBUTEUR A LISIER

(30) Priorität: 05.11.2014 DE 202014105317 U
(43) Veröffentlichungstag der Anmeldung: 11.05.2016
(73) Patentinhaber: Fliegl Agrartechnik GmbH, 84453 Mühldorf am Inn (DE)
(72) Erfinder: FLIEGL jun., Josef, 84453 Mühldorf (DE)
(74) Vertreter: Tetzner, Michael

(56) Entgegenhaltungen:
- EP-A1- 0 772 965
- DE-A1- 10 041 148
- DE-U1- 20 320 041
- US-A1- 2005 242 213

## Beschreibung

Die Erfindung betrifft einen Gülleverteiler mit einem Güllefass und einem Gülleverteilersystem, dass wenigstens einen ersten und eine zweiten schwenkbaren Verteilerarm und eine Vielzahl von Gülleauslassöffnungen zum Ausbringen der Gülle aufweist.

Ein derartiger Gülleverteiler ist beispielsweise aus der DE 296 12 113 U1 bekannt. Durch die schwenkbaren Verteilerarme, die in der Ausbringstellung quer zur Fahrtrichtung ausgerichtet sind, kann heutzutage eine Breite von 20m und mehr abgedeckt werden. Dazu wird die Gülle über bis zu 80 und mehr Düsen auf die Ackerfläche ausgebracht. Zur Verteilung der Gülle auf die einzelnen Düsen ist wenigstens ein Gülleverteilerbehälter angeordnet, an den die einzelnen Düsen angeschlossen sind. Das Fluidverbindungssystem zum Transport der Gülle wird zwischen Güllefass, Gülleverteilerbehälter und den einzelnen Düsen üblicherweise über flexible Schläuche gewährleistet. Durch die Flexibilität der Schläuche wird das Verschwenken der Verteilerarme von der Transportstellung in die Gülleausbringstellung und zurück erleichtert. Die flexiblen Schläuche sind aber durch die Schwenkbewegungen und den durch die Gülle im Inneren der Schläuche aufgebauten Druck einem ständigen Verschleiß ausgesetzt und müssen regelmäßig geprüft und ggf. ausgetauscht werden.

Aus der DE 2013 20 041 U1 geht ein Gülleverteiler mit einer Vielzahl von Schlauchleitungen zwischen Güllefass und den einzelnen Düsen hervor. An den schwenkbaren Verteilerarmen sind außen jeweils ein weiterer Verteilerarm schwenkbar angelenkt.

Eine weitere Vorrichtung zum Ausbringen von flüssigen Stoffgemischen ist ferner aus der DE 100 41 148 A1 bekannt. Dort wird die Gülle über ein Gestänge des Traggerüsts bis zu den Auslassschläuchen verteilt. Hierzu sind am Ende der Ausleger Pumpen vorgesehen, welche die auszutragende Flüssigkeit aus einem Tank absaugen, die mit der Flüssigkeit angesaugten Feststoffteile zerkleinern und die so behandelte Suspension in die Auslaufschläuche drücken.

Die EP 0 772 965 A1 offenbart einen Gülleverteiler mit einem Güllefass und einem Gülleverteilersystem mit zwei schwenkbaren Verteilerarmen, an denen Gülleverteilerbehälter gehaltert sind, die jeweils wenigstens einen Eingang und eine Vielzahl von Auslässen (18) aufweisen, wobei im Inneren der Gülleverteilerbehälter ein als Schneckenförderer ausgebildetes Förderelement zum gleichmäßigen Verteilen der Gülle über die Vielzahl der Auslässe vorgesehen ist.

Der Erfindung liegt nun die Aufgabe zugrunde, den Verschleiß des Fluidverbindungssystems zum Transport der Gülle zu verringern.

Erfindungsgemäß wird diese Aufgabe durch die Merkmale des Anspruches 1 gelöst. Bevorzugte Ausgestaltungen der Erfindung sind Gegenstand der weiteren Ansprüche.

Durch die Ausbildung der schwenkbaren Verteilerarme mit wenigstens einer starren Rohrleitung, die einen Teil des Fluidverbindungsystems zwischen Güllefass und Gülleverteilerbehälter bildet, kann in diesem Bereich auf die flexiblen Schläuche verzichtet werden, sodass der Verschleiß in diesem Bereich im Wesentlichen ausgeschlossen werden kann. Die starren Rohrleitungen dienen zum einen als Teil des Traggerüsts der Verteilerarme und zum anderen zum Transport der Gülle. Durch diese Doppelfunktion können die Kosten des Gülleverteilersystems reduziert werden.

Um die Breite des Gülleverteiler in der Ausbringstellung weiter zu vergrößern, sind an den äußeren Enden des ersten bzw. zweiten Verteilerarms jeweils ein weiterer Verteilerarm, nämlich ein dritter bzw. vierter Verteilerarm schwenkbar gehaltert sein. Dabei sind an dem dritten und vierten Verteilerarm jeweils wenigstens ein weiterer Gülleverteilerbehälter gehaltert, die mit einer weiteren Vielzahl von Gülleauslassöffnungen in Verbindung stehen.

Weiterhin kann vorgesehen werden, dass an jedem Verteilerarm eine Vielzahl von Düsen gehaltert sind, welche jeweils eine der Gülleauslassöffnungen bilden, die einzeln oder in Gruppen mit einem der Gülleverteilerbehälter in Fluidverbindung stehen. Die Vielzahl an Düsen kann dabei an sich in Richtung der Verteilerarme erstreckenden Längsträgern angebracht sein, die an den Verteilerarmen vorzugsweise schwenkbar gehaltert sind. Sind ein dritter und vierter Verteilerarm vorgesehen, können diese jeweils wenigstens eine weitere, starre Rohrleitung zum Transport der Gülle aufweisen. In einer weiteren Ausgestaltung der Erfindung kann der erste und dritte Verteilerarm bzw. zweite und vierte Verteilerarm über ein erstes bzw. zweites Drehteil verbunden sein, wobei das erste bzw. zweite Drehteil ein Verschwenken des dritten bzw. vierten Verteilerarms ermöglicht und jeweils eine Durchführung für die Gülle vom ersten zum dritten bzw. vom zweiten zum vierten Verteilerarm aufweist.

Die Gülleverteilerbehälter weisen wenigstens einen Eingang, der mit einen der starren Rohrleitungen der Verteilerarme in Verbindung steht und eine Vielzahl von Auslässen auf, wobei im Inneren der Gülleverteilerbehälter ein Förderelement, beispielsweise ein Schneckenförderer, zur gleichmäßigen Verteilung der Gülle über die Vielzahl der Auslässe vorgesehen ist. Die Auslässe sind vorzugsweise über flexible Schlauchverbindungen mit den Düsen bzw. Gülleauslassöffnungen verbunden. Die Verteilerarme werden zweckmäßigerweise so dimensioniert, dass sie zusammen in der Ausbringstellung eine Länge quer zur Fahrtrichtung von wenigstens 10 m, vorzugsweise wenigstens 15 m und höchstvorzugsweise wenigstens 20 m aufweisen. Der Abstand der einzelnen Düsen bzw. Gülleauslassöffnungen beträgt vorzugsweise zwischen 200 und 350 mm. Dabei ergeben sich wenigstens 30 bis 80 und mehr Auslassöffnungen über die gesamte Länge der Verteilerarme.

Um die flexiblen Schläuche zwischen den Gülleverteilerbehältern und den Gülleauslassöffnungen möglichst kurz zu halten, werden die Gülleverteilerbehälter zweckmäßigerweise an den unteren Enden, also dem dem Ackerboden zugewandten Ende der Verteilerarme angebracht. Außerdem ist es aus Kostengründen zweckmäßig, wenn sich die Gülleverteilerbehälter nicht über die gesamte Länge der Verteilerarme erstrecken, da eine deutlich kürzere Länge für eine gleichmäßige Verteilung der Gülle auf die Vielzahl der Auslässe des Gülleverteilerbehälters ausreichend ist.

Ein Ausführungsbeispiel der Erfindung wird im Folgenden anhand der Beschreibung näher erläutert.

In der Zeichnung zeigen
- Fig. 1: eine dreidimensionale Darstellung des Gülleverteilers in der Transportstellung,
- Fig. 2: eine Draufsicht des Gülleverteilers in der Ausbringstellung und
- Fig. 3: eine Seitenansicht des ersten und dritten Verteilerarms gemäß Fig. 2.

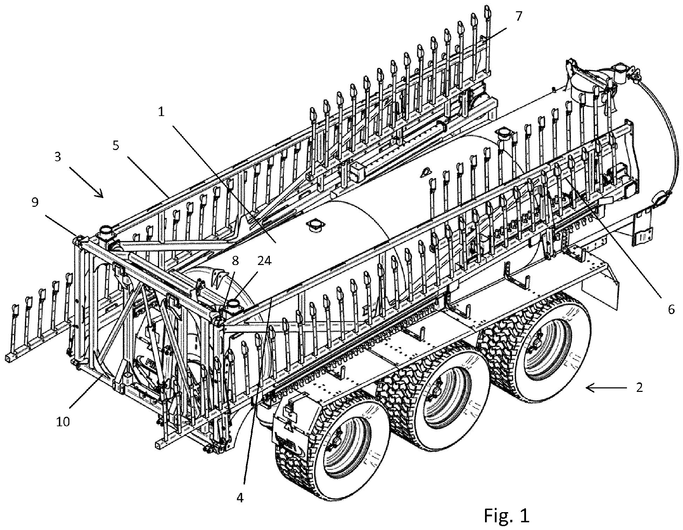

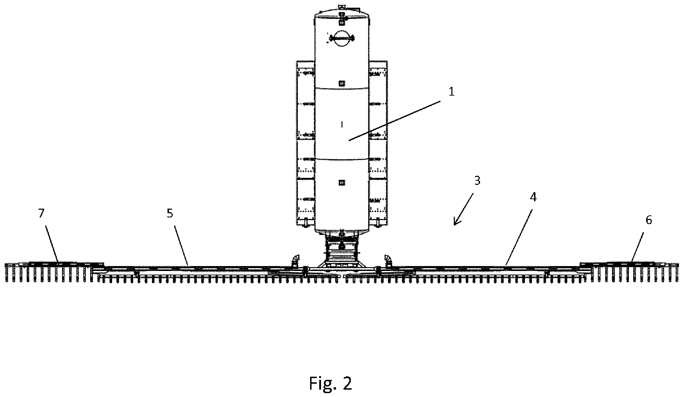

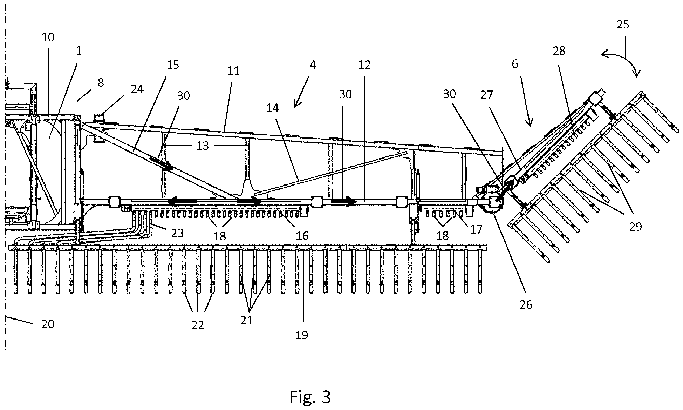

Der im Fig. 1 dargestellte Gülleverteiler umfasst im Wesentlichen ein Güllefass 1, ein Fahrwerk 2 und ein Gülleverteilersystem 3. Das Gülleverteilersystem weist einen ersten und einen zweiten schwenkbaren Verteilerarm 4, 5 auf, die in Fig. 1 in der Transportstellung parallel zum Güllefass 1, d. h. in Fahrtrichtung, ausgerichtet sind. In Fig. 2 und Fig. 3 sind die Verteilerarme in der Ausbringstellung dargestellt, in der sie sich im Wesentlichen quer zur Fahrtrichtung erstrecken. Hierzu ist am hinteren Ende des Güllefasses 1 ein Haltegestell 10 angebracht, an dem die beiden Verteilerarme 4, 5 um Achsen 8 bzw. 9 schwenkbar gehaltert sind.

Die Verteilerarme 4, 5 werden jeweils durch ein Traggerüst gebildet, dass im dargestellten Ausführungsbeispiel eine obere Längsstrebe 11, eine untere Längsstrebe 12 und mehrere Querstreben 13 umfasst. Außerdem sind zusätzliche Versteifungsstreben 14, 15 vorgesehen. An der unteren Längsstrebe 12 sind zwei Gülleverteilerbehälter 16, 17 angebracht, die jeweils wenigstens einen nicht näher dargestellten Eingang und eine Vielzahl von Auslässen 18 aufweisen. Im Inneren der Gülleverteilerbehälter kann außerdem ein nicht näher dargestelltes Förderelement, insbesondere ein Schneckenförderer vorgesehen werden, um die Gülle gleichmäßig auf die Auslässe 18 zu verteilen. Am unteren Ende des Verteilerarms 4 ist weiterhin ein Längsträger 19 gehaltert, der sich im Wesentlichen über die gesamte Länge des ersten Verteilerarms 4 und in der Ausbringstellung darüber hinaus bis etwa zur Längsmittelebene 20 des Gülleverteilers erstreckt. An diesem Längsträger 19 sind mit gleichmäßigem Abstand von beispielsweise 250 oder 300 mm, eine Vielzahl von Düsen 21 angeordnet, an deren Enden Gülleauslassöffnungen 22 vorgesehen sind. Jede Düse 21 ist über einen flexiblen Schlauch 23 mit einem Auslass 18 des Gülleverteilerbehälters 16 bzw. 17 verbunden (in Fig. 3 sind aus Gründen der Übersichtlichkeit lediglich vier dieser Schläuche dargestellt).

Im dargestellten Ausführungsbeispiel sind die Versteifungsstrebe 15 und die untere Längsstrebe 12 als starre und miteinander in Fuildverbindung stehende Rohrleitungen ausgebildet, die zum Transport der Gülle zu den Gülleverteilerbehältern 16 und 17 dienen. Über eine nicht näher dargestellte Öffnung zwischen der als untere Längsstrebe 12 ausgebildeten Rohrleitung und den Gülleverteilerbehältern 16, 17 gelangt die Gülle in die Gülleverteilerbehälter 16, 17, wo sie über Auslässe 18 verteilt wird. Die als starre Rohrleitung ausgebildete Versteifungstrebe 15 weist einen Einlassstutzen 24 mit dem sie über einen, nicht näher dargestellten flexiblen Schlauch mit dem Güllefass verbunden ist. Mit Hilfe einer Pumpe wird die Gülle somit durch den ersten bzw. zweiten Verteilerarm 4, 5 bis in die Gülleverteilerbehälter 16, 17 und von dort bis zu den Gülleauslassöffnungen 22 geleitet.

Der Längsträger 19 ist schwenkbar an der unteren Längsstrebe 12 gehaltert, sodass die Düsen 21 in der in Fig. 1 dargestellten Transportstellung relativ zum Verteilerarm 4 nach oben geschwenkt werden können, um ein Nachtropfen von Gülle auf den öffentlichen Straßen zu vermeiden.

Nachdem der erste und zweite Verteilerarm 4, 5 in der Transportstellung seitlich an das Güllefass 11 angeklappt werden, sollte die Länge der Verteilerarme die Länge des Güllefasses nicht übersteigen. Um dennoch die Gesamtbreite der Verteilerarme zu vergrößern sind im dargestellten Ausführungsbeispiel an den äußeren Enden der ersten und zweiten Verteilerarme 4, 5 jeweils ein dritter bzw. vierter Verteilerarm 6, 7 schwenkbar angebracht (Pfeil 25 in Fig. 3). Fig. 1 zeigt dabei die eingeklappte Stellung des dritten bzw. vierten Verteilerarms 6, 7, während in Fig. 2 die ausgeklappte Ausbringstellung ersichtlich ist. In Fig. 3 befindet sich der dritte Verteilerarm 6 noch in einer Zwischenstellung.

Der dritte bzw. vierte Verteilerarm 6, 7 wird dabei jeweils über ein hydraulisch ansteuerbares Drehteil 26 von der in Fig. 1 gezeigten Transportstellung in die in Fig. 2 gezeigte Ausbringstellung gebracht. Der dritte bzw. vierte Verteilerarm 6, 7 ist in seiner Länge deutlich kleiner ausgebildet und muss daher auch weniger ausgesteift werden. Seine untere Längsstrebe 27 ist aber wiederum als starre Rohrleitung zum Transport der Gülle ausgebildet. Ein weiterer Gülleverteilerbehälter 28 ist wiederum an der unteren Längsstrebe 27 angebracht und steht über nicht näher dargestellte flexible Schläuche mit Düsen 29 in Verbindung. Der Drehteil 26 ist zweckmäßigerweise mit einem nicht näher dargestellten Durchlass ausgebildet, um den Durchfluss der Gülle von der unteren Strebe 12 des ersten Verteilerarms 4 zur unteren Strebe 27 des dritten Verteilerarms 6 zu ermöglichen. Der Fluss der Gülle durch die Rohrleitungen der Verteilerarme ist in Fig. 3 durch Pfeile 30 visualisiert.

Die als Rohrleitungen für den Transport der Gülle ausgebildete Versteifungsstrebe 15, wie auch die unteren Streben 12, 27 bilden vorzugsweise gleichzeitig auch tragende Teile der Verteilerarme, sodass für diesen Teil des Fluidverbindungssystems keine zusätzlichen Bauteile erforderlich sind. Besonders vorteilhaft ist dabei vor allem auch die Anbindung des dritten bzw. vierten Verteilerarms 6, 7 über die als Rohrleitungen ausgebildeten untern Längsstreben 12, 27 der Verteilerarme 4, 7, da auf diese Weise auf flexible Schläuche verzichtet werden kann, die bei jedem Schwenkvorgang von der Ausbringstellung in die Transportstellung und zurück einem hohen Verschleiß ausgesetzt wären.

Im Rahmen der Erfindung ist es jedoch auch denkbar, die oberen Längsstreben 11 als Rohrleitungen für den Transport der Gülle auszubilden. Auch könnten die Gülleverteilerbehälter in einem oberen, beispielsweise an den oberen Längsstreben, oder einem mittleren Bereich der Verteilerarme angeordnet werden.

## Patentansprüche

1. Gülleverteiler mit
a. einem Güllefass (1) und
b. einem Gülleverteilersystem (3) mit
b1. wenigstens einem ersten und einem zweiten schwenkbaren Verteilerarm (4, 5), wobei die beiden Verteilerarme von einer parallel zur Fahrrichtung ausgerichteten Transportstellung in eine quer zur Fahrrichtung ausgerichteten Gülleausbringstellung verschwenkbar sind,
b2. wobei die Verteilerarme jeweils ein Traggerüst aus mehreren Streben aufweisen, an denen Gülleverteilerbehälter (16, 17) gehaltert sind, die jeweils wenigstens einen Eingang und eine Vielzahl von Auslässen (18) aufweisen, wobei im Inneren des Gülleverteilerbehälters ein als Schneckenförderer ausgebildetes Förderelement zum gleichmäßigen Verteilen der Gülle über die Vielzahl der Auslässe vorgesehen ist,
b3. einer Vielzahl von Gülleauslassöffnungen (22) zum Ausbringen der Gülle, die mit den Auslässen (18) der Gülleverteilerbehältern (16, 17) in Verbindung stehen, und
b4. einem Fluidverbindungssystem zum Transport der Gülle zwischen dem Güllefass (1) und den Gülleauslassöffnungen (22),
wobei wenigstens eine Strebe jedes Traggerüsts als starre Rohrleitung ausgebildet ist und einen Teil des Fluidverbindungssystems zwischen Güllefass (1) und Gülleverteilerbehälter (16, 17) bildet und zum Transport der Gülle dient, wobei der Eingang der Gülleverteilerbehälter mit einer der starren Rohrleitungen der Verteilerarme in Verbindung steht,
und wobei zur Verbreiterung des Gülleverteilersystems (3) in der Gülleausbringstellung am ersten Verteilerarm (4) ein dritter Verteilerarm (6) und am zweiten Verteilerarm (5) ein vierter Verteilerarm (7) schwenkbar gehaltert sind und ferner am dritten und vierten Verteilerarm (6, 7) jeweils wenigstens ein weiterer Gülleverteilerbehälter (28) gehaltert ist, die mit einer weiteren Vielzahl von Gülleauslassöffnungen in Verbindung stehen.

2. Gülleverteiler nach dem vorhergehenden Ansprüche" **dadurch gekennzeichnet, dass** an jedem Verteilerarm eine Vielzahl von Düsen (21, 29) gehaltert sind, die einzeln oder in Gruppen mit einem der Gülleverteilerbehälter in Fluidverbindung stehen.

3. Gülleverteiler nach Anspruch 2, **dadurch gekennzeichnet, dass** die Vielzahl an Düsen (21) an sich in Richtung der Verteilerarme erstreckenden Längsträgern (19) angebracht sind, die an den Verteilerarmen (4-7) gehaltert sind.

4. Gülleverteiler nach Anspruch 1, **dadurch gekennzeichnet, dass** auch der dritte und vierte Verteilerarm (6, 7) jeweils wenigstens eine weitere, starre Rohrleitung zum Transport der Gülle aufweist.

5. Gülleverteiler nach Anspruch 1, **dadurch gekennzeichnet, dass** der erste und dritte Verteilerarm (4, 6) über eine erstes Drehteil (26) verbunden sind, wobei das erste Drehteil ein Verschwenken des dritten Verteilarms (6) ermöglicht und eine erste Durchführung für die Gülle vom ersten zum dritten Verteilerarm aufweist.

6. Gülleverteiler nach Anspruch 1, **dadurch gekennzeichnet, dass** der zweite (5) und vierte Verteilerarm (7) über ein zweites Drehteil verbunden sind, wobei das zweite Drehteil ein Verschwenken des vierten Verteilarms (7) ermöglicht und eine zweite Durchführung für die Gülle vom zweiten zum vierten Verteilerarm aufweist.

7. Gülleverteiler nach einem oder mehreren der vorhergehenden Ansprüche, **dadurch gekennzeichnet, dass** das Güllefass (1) und die einen Teil des Fluidverbindungssystems bildenden, starren Rohrleitungen über flexible Schlauchverbindungen mit einander verbunden sind.

8. Gülleverteiler nach einem oder mehreren der vorhergehenden Ansprüche, **dadurch gekennzeichnet, dass** die Gülleverteilerbehälter (16, 17) mit den Gülleauslassöffnungen (22) über flexible Schlauchverbindungen (23) mit einander verbunden sind.

9. Gülleverteiler nach Anspruch 1, **dadurch gekennzeichnet, dass** alle Verteilarme (4-7) zusammen in der Ausbringstellung eine Länge quer zur Fahrrichtung von wenigstens 10m, vorzugsweise wenigstens 15m und höchstvorzugsweise wenigstens 20m aufweisen.

10. Gülleverteiler nach Anspruch 1, **dadurch gekennzeichnet, dass** die Gülleverteilerbehälter (16, 17, 28) an einem unteren Ende der Verteilerarme (4-7) angebracht sind.

## Claims

1. Liquid manure distributor, comprising
a) a liquid manure tank (1) and
b) a liquid manure distributor system (3) comprising
b1. at least one first and one second pivotable distributor arm (4, 5), wherein the two distributor arms can be pivoted from a transport position, which is oriented in parallel with the direction of travel, into a liquid manure application position, which is oriented perpendicularly to the direction of travel,
b2. wherein the distributor arms each comprise a supporting structure formed by a plurality of struts on which liquid manure distributor containers (16, 17) are mounted, which containers each comprise at least one inlet and a plurality of outlets (18), wherein a conveying element that is formed as a screw conveyor is provided in the interior of the liquid manure distributor container in order to uniformly distribute the liquid manure through the plurality of outlets;
b3. a plurality of liquid manure outlet openings (22) for applying the liquid manure, which openings are connected to the outlets (18) of the liquid manure distributor containers (16, 17); and
b4. a fluid connecting system for transporting the liquid manure between the liquid manure tank (1) and the liquid manure output openings (22),
wherein at least one strut of each supporting structure is formed as a rigid conveying pipe, forms a part of the fluid connecting system between the liquid manure tank (1) and the liquid manure distributor containers (16, 17), and transports the liquid manure, wherein the inlet of the liquid manure distributor is connected to one of the rigid conveying pipes of the distributor arms,
and wherein, in order to extend the liquid manure distributor system (3) in the liquid manure application position, a third distributor arm (6) is pivotably mounted on the first distributor arm (4) and a fourth distributor arm (7) is pivotably mounted on the second distributor arm (5), and furthermore at least one additional liquid manure distributor container (28) is mounted on each of the third and fourth distributor arms (6, 7), which additional distributor containers are connected to an additional plurality of liquid manure outlet openings.

2. Liquid manure distributor according to the preceding claim, **characterised in that** a plurality of nozzles (21, 29) are mounted on each distributor arm, which nozzles are fluidically connected, individually or in groups, to one of the liquid manure distributor containers.

3. Liquid manure distributor according to claim 2, **characterised in that** the plurality of nozzles (21) are attached to longitudinal supports (19) that extend towards the distributor arms and are mounted on the distributor arms (4-7).

4. Liquid manure distributor according to claim 1, **characterised in that** the third and fourth distributor arms (6, 7) also each comprise at least one additional, rigid conveying pipe for transporting the liquid manure.

5. Liquid manure distributor according to claim 1, **characterised in that** the first and third distributor arms (4, 6) are connected by a first rotary part (26), the first rotary part allowing the third distributor arm (6) to pivot and comprising a first passage for the liquid manure from the first to the third distributor arms.

6. Liquid manure distributor according to claim 1, **characterised in that** the second (5) and fourth (7) distributor arms are connected by a second rotary part, the second rotary part allowing the fourth distributor arm (7) to pivot and comprising a second passage for the liquid manure from the second to the fourth distributor arms.

7. Liquid manure distributor according to one or more of the preceding claims, **characterised in that** the liquid manure tank (1) and the rigid conveying pipes that form a part of the fluid connecting system are interconnected by flexible hose connections.

8. Liquid manure distributor according to one or more of the preceding claims, **characterised in that** the liquid manure distributor containers (16, 17) and the liquid manure outlet openings (22) are interconnected by flexible hose connections (23).

9. Liquid manure distributor according to claim 1, **characterised in that**, in the application position, all of the distributor arms (4-7) together have a length of at least 10 m, preferably at least 15 m and most preferably at least 20 m, perpendicular to the direction of travel.

10. Liquid manure distributor according to claim 1, **characterised in that** the liquid manure distributor containers (16, 17, 28) are attached to a lower end of the distributor arms (4-7).

## Revendications

1. Distributeur de purin avec
a. un fût de purin (1) et
b. un système de distribution de purin (3) avec
b1. au moins un premier et un deuxième bras de distribution (4, 5) pivotants, sachant que les deux bras de distribution peuvent être pivotés d'une position de transport, qui best orientée parallèlement à la direction de marche, à une position de distribution de purin, qui est orientée transversalement par rapport à la direction de marche,
b2. sachant que les bras de distribution sont dotés chacun d'une charpente de support composée de plusieurs entretoises, sur lesquelles sont fixés des récipients de distribution de purin (16, 17) qui sont dotés chacun d'au moins une entrée et d'un grand nombre de sorties (18), un élément de transport, réalisé sous la forme d'un convoyeur à vis sans fin, étant prévu à l'intérieur du récipient de distribution de purin, pour la distribution simultanée du purin par le grand nombre de sorties.
b3. avec une pluralité d'ouvertures de sortie de purin (22) pour la distribution du purin, lesquelles sont reliées aux sorties (18) des récipients de distribution de purin (16, 17), et
b4. un système de communication fluidique pour le transport du purin entre le fût de purin (1) et les ouvertures de sortie de purin (22),
sachant qu'au moins une entretoise de chaque charpente de support est réalisée sous la forme d'une conduite tubulaire rigide et forme une partie du système de communication fluidique entre le fût de purin (1) et les récipients de distribution de purin (16, 17), et est destinée au transport du purin, sachant que l'entrée des récipients de distribution de purin (16, 17) est reliée à l'une des conduites tubulaires, rigides des bras de distribution,
et sachant que, pour élargir le système de répartition de purin (3), sont maintenus en pivotement un troisième bras de distribution (6) sur le premier bras de distribution (4) et un quatrième bras de distribution (7) sur le deuxième bras de distribution (5), et que, de plus, au moins un autre récipient de distribution de purin (28) est maintenu sur le troisième bras de distribution et sur le quatrième bras de distribution (6, 7), lesquels autres récipients sont en communication avec une autre pluralité d'ouvertures de sortie de purin.

2. Distributeur de purin selon la revendication précédente,
**caractérisé en ce que,** sur chaque bras de distribution, sont maintenues plusieurs buses (21, 29), qui, individuellement ou en groupes, sont en communication fluidique avec l'un des récipients de purin.

3. Distributeur de purin selon la revendication 2,
**caractérisé en ce que** les plusieurs buses (21) sont installées sur des supports longitudinaux (19) s'étendant dans la direction des bras de distribution, sont maintenus sur les bras de distribution (4 - 7).

4. Distributeur de purin selon la revendication 1,
**caractérisé en ce que** le troisième et le quatrième bras de distribution (6,7) sont aussi dotés chacun d'au moins une autre conduite tubulaire rigide, destinée à l'acheminement du purin.

5. Distributeur de purin selon la revendication 1,
**caractérisé en ce que** le premier et le troisième bras de distribution (4, 6) sont reliés par l'intermédiaire d'une première pièce rotative (26), sachant que la première pièce rotative permet un pivotement du troisième bras de distribution (6) et est dotée d'un premier passage de purin du premier au troisième bras de distribution.

6. Distributeur de purin selon la revendication 1,
**caractérisé en ce que** le deuxième bras de distribution (5) et le quatrième bras de distribution (7) sont reliés par l'intermédiaire d'une deuxième pièce rotative, sachant que la deuxième pièce rotative permet un pivotement du quatrième bras de distribution (7) et est dotée d'un deuxième passage de purin du deuxième au quatrième bras de distribution.

7. Distributeur de purin selon l'une ou plusieurs des revendications précédentes,
**caractérisé en ce que** le fût de purin (1) et les conduites tubulaires rigides, qui forment une partie du système de communication fluidique, sont reliés ensemble par l'intermédiaire de liaisons en tuyaux flexibles.

8. Distributeur de purin selon l'une ou plusieurs des revendications précédentes,
**caractérisé en ce que** les récipients de distribution de purin (16, 17) sont reliés aux ouvertures de sortie de purin (22) par l'intermédiaire de liaisons en tuyaux flexibles (23).

9. Distributeur de purin selon la revendication 1,
**caractérisé en ce que** tous les bras de distribution (4 - 7) présentent ensemble, dans la position de distribution, transversalement par rapport à la direction de marche, une longueur d'au moins 10 m, de préférence d'au moins 15 m, et le plus préférentiellement d'au moins 20 m.

10. Distributeur de purin selon la revendication 1,
**caractérisé en ce que** les récipients de distribution de purin (16, 17, 28) sont montés à une extrémité inférieure des bras de distribution (4 - 7).
